# EUROPEAN PATENT APPLICATION

(11) **EP 1 167 512 A2**
(43) Date of publication of application: **02.01.2002**
(21) Application number: 01115364.0
(22) Date of filing: 26.06.2001
(51) Int. Cl.: C12G 1/032

(54) **Fermentation system for vegetable substances, in particular for grapes**

(30) Priority: 27.06.2000 IT TO000634
(71) Applicant: Self S.a.s. di Scagliotti Luisa & C, 15033 Casale Monferrato (AL) (IT)
(72) Inventor: Francia, Stefano, 15030 Rosignano Monferrato (AL) (IT)
(74) Representative: Dini, Roberto, Dr. Ing.

(57) **Abstract**

Fermentation system (1) for vegetable substances (8,8A), in particular for grapes, comprising at least a container (2) containing a portion of said vegetable substances (8,8A), a tank (3) containing a second portion of said vegetable substances (8,8A) located in the upper section of said container (2), a valve (4) being apt to put said tank (3) in communication with said container (2), an outlet duct (5) for the downfall of said vegetable substances (8,8A) from said tank (3) to said container (2), first means (17) for activating said valve (4), second means (12) for oxygenating of said vegetable substances (8,8A).

The invention is featured in that said second oxygenating means (12) are apt to perform a forced oxygenation of said vegetable substances (8,8A).

## Description

### DESCRIPTION

The present invention relates to a fermentation system for vegetable substances, in particular for the fermentation of pressed grapes or must.

As known, during fermentation of pressed grapes some portions are subject to sedimentation while other portions remain floating; this drawback leads to the undesired result of very thick hard layers or crusts forming on the surface; this surface stratification is commonly causing a fast mildew production, which may damage the whole product.

In order to avoid such a drawback, devices are commonly known being apt to perform circulation of the product subject to maceration or fermentation, which utilize a pump to suck a portion of said product from the lower section of the container and send it to an upper tank located inside the container itself, which are intercommunicating by means of a large drain or recirculation valve; according to this system, the product or must will be sucked by a pump from the lower container and sent into the upper tank; during this stage the above drain valve remains closed.

After filling the upper tank and a given time preset by a control device or timer, the shutter of the above drain valve opens and the product contained in the upper tank falls violently on the product contained in the container lower section; thus, the whole product is put into motion to avoid crusts and mildews production, ensuring extraction of colour, polyphenols, antocyans and all elements contained inside the grape berry.

During the fermentation is known the need to provide the oxygenation of the must in predetermined steps of the fermentation process. The oxygenation is useful for yeasts metabolism, since it facilitates fermentation start, favouring bacterial flora expansion and preventing premature fermentation stops.

Moreover, must oxygenation ensures condensation reactions between the tannins and antocyans, with consequent formation of more complex molecules ensuring colour stability.

In general, oxygenation is obtained by means of a Venturi tube, through which air is sucked from outside the container and mixed with the must when a portion of it drawn from the lower section of the container is discharged in the upper tank located inside the container. Air suction is generally controlled in a common way, so as to let the air flow through only if required.

However, this oxygenation system has several drawbacks, such as an unsatisfactory must oxygenation when large quantities of product are displaced, since the amount of air sucked in and mixed with the must is not enough for complete oxygenation.

In addition, even providing a vent tube between the must container and the environment outside, must downfall from the upper tank to the lower section of the container will occur in an environment containing a large amount of carbon dioxide, which has developed following the fermentation process.

In fact, carbon dioxide having a higher specific gravity than air tends to remain inside the container between the must and the upper tank; as a result, the vent tube will only avoid a pressure increase inside the container, since only a portion of the carbon dioxide contained in it is discharged outside.

Therefore, the must downfall causes the carbon dioxide in the environment to enter in the must below jeopardizing its oxygenation, since a portion of the air from the oxygenation tube will mix with the carbon dioxide and not with the must, and is dispersed outside through the vent tube.

It is the object of the present invention to solve the above drawbacks of the known technique in a simple, cost effective, reliable way.

In this frame, a first object of the present invention is to provide a system being apt to improve must oxygenation during the fermentation process.

A second object of the present invention is to provide a system, which has a device being apt to provide a must oxygenation during must downfall from an upper tank to a lower container.

A third object of the present invention is to provide a system, which has a device being apt to obtain a forced must oxygenation during the fermentation process.

Another object of the present invention is to provide a system, which has a device being apt to remove the carbon dioxide contents from the container lower section before of the must downfall from the upper tank.

In order to achieve one or more of such aims, it is the object of the present invention to provide a system being apt to improve must oxygenation during fermentation or maceration process of vegetable substances, incorporating the features of the annexed claims, which form an integral part of the description herein.

Further objects, features and advantages of the present invention will become apparent from the following detailed description and annexed drawings, which are supplied by way of non limiting example, wherein:
- Fig. 1 shows a partial lengthwise section of a system according to the present invention, in a first operating condition;
- Fig. 2 shows a partial lengthwise section of a system according to the present invention, in a second operating condition;
- Fig. 3 shows a partial cross section III - III of Fig. 1, according to the present invention.

With reference to the above figures, reference 1 indicates as a whole a fermentation system for vegetable substances, in particular for grapes; reference 2 indicates a container for containing the fermenting must and reference 3 a tank located in the upper section of the container 2. The tank 3 is in communication with the container 2 through a valve 4 and a duct 5 for discharging the must contained in the tank 3 inside the container 2.

The valve 4 is made from a hollow cylindrical element 6, which has a flange 7 on one end; the flange 7 strikes against the upper edge of the discharge duct 5 for the lower closure of the tank 3.

The length of the cylindrical element 6 is apt to avoid an excessive filling of the tank 3 acting as an overflow device delimiting the filling limit of the tank; in fact, when the must level in the tank 3 exceeds the upper end of the cylindrical element 6, the exceeding must portion will overflow inside the container 2 through the main hole of the cylindrical element 6.

Reference 8 indicates the must in the container 2 and 8A the must in the tank 3, reference 9 indicates a suction duct for the must, in communication with the lower inner section of the container 2 through a pump, not shown, for pumping the must from the container 2 to the tank 3; the other end of the duct 9 is connected to the upper section of the tank 3.

Reference 10 indicates a duct putting the inside of the container 2 in communication with the environment outside to vent the carbon dioxide produced in the container due to fermentation. The vent duct 10 is used to avoid a pressure increase of the carbon dioxide, which has a higher specific gravity than the air and tends to remain inside the container 2, as well as for the purposes further described.

Reference 11 indicates a pipe union above the tank 3, wherein the end section of the duct 9 is inserted for introducing the must 8 from the container 2 into the tank 3.

Reference 12 indicates an oxygenation device for the must. This oxygenation device 12 has at least three equidistant tubular elements, 13A, 13B and 13C, respectively, which are arranged vertically at about 120° from each other and interconnected by common means, such as stirrups.

The three tubular elements 13A, 13B and 13C are located vertically and centrally at a distance of 120° from each other, both inside the pipe union 11 and cylindrical element 6 of the valve 4.

The upper end of the tubular elements 13A, 13B and 13C extends outside the pipe union 11 flowing into a manifold 14, which in turn is connected by means of a connector 15 to a compressed air source, e.g. a turbine 16, whereas their lower end extends into the drain duct 5, under the valve 4.

A pneumatic actuator 17 is centrally located between the tubular elements 13A, 13B and 13C.

The pneumatic actuator 17 is solidly fastened with its body 18 to the cylindrical element 6 of the valve 4, whereas its shank 19 is fastened to a dowel 20 solidly located at the end of a second cylindrical element 21. The second cylindrical element 21 is placed vertically and centrally to the drain duct 5 and is fastened to it by common means. The tubular elements 13A, 13B and 13C are commonly fastened to the connection elements of the cylindrical element 21 and drain duct 5.

Thus, since the shank 19 fastened to the dowel 20 of the second cylindrical element 21 is unable to displace itself, being the second cylindrical element a fixed one, when the pneumatic actuator 17 is activated, the vertical movement will be performed by the body 18 sliding over the shank 19.

The vertical movement of the body 18 of the pneumatic actuator 17 will cause the valve 4, solidly connected to it through the cylindrical element 6, to perform the same movement, thus opening the path between the tank 3 and container 2 and causing the must 8A contained in the tank 3 to fall down on the upper surface of the must 8 in the container 2.

References 22 and 23 indicate two diffusers in the lower section of the drain duct 5, whose function is to distribute the downfall of the must 8A from the tank 3 over the whole surface of the must 8 in the container 2, so as to obtain a substantially homogeneous mixing.

Diffusers 22 and 23 have substantially a cone-truncated shape with different diameters placed concentric to each other, with their vertical axis on the same axis of the duct 5. The diffuser 22 is solidly connected to the drain duct 5 by means of stirrups not represented, as commonly known, in such a position to leave a path between the diffuser 22 and the drain duct 5 for discharging the must 8A from the tank 3 to the container 2.

The diffuser 23 is placed inside the diffuser 22 and is solidly connected to both the diffuser 22 and second cylindrical element 21 with common means, in such a position to leave a path between both diffusers 22 and 23 and the second cylindrical element 21 for the must 8A falling down from the tank 3. Inclination of the diffusers 22 and 23 is preset in function of the device 1 and relevant requirements.

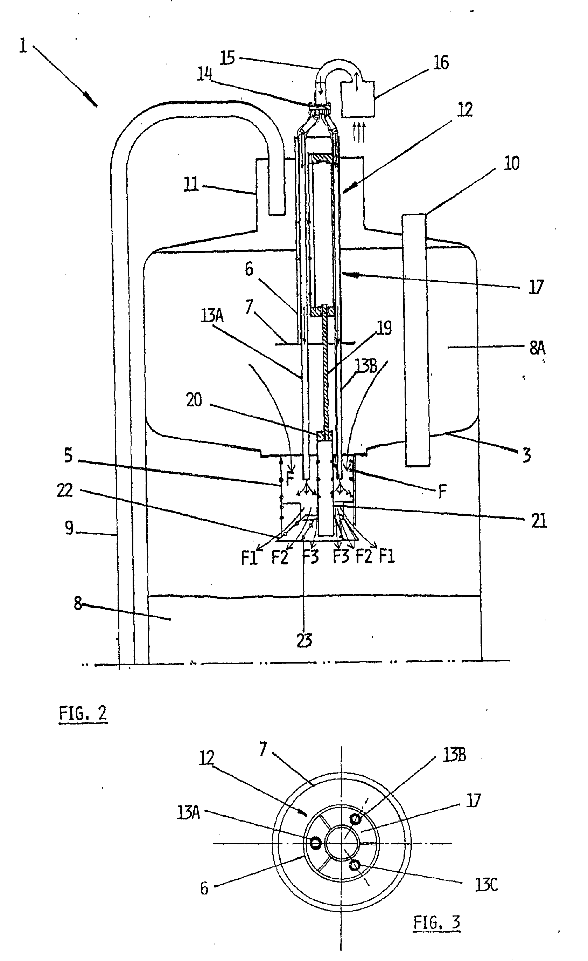

As shown in Fig. 2, the flow F of the must 8A, previously loaded in the upper tank 3 by means of the diffusers 22 and 23 and of the second cylindrical element 21, falls down in the container 2 split in three flows F1, F2 and F3, respectively.

The flow F1 is conveyed by the diffuser 22 over the peripheral area of the must surface 8 in the container 2, the flow F2 is conveyed by the diffuser 23 over an intermediate area, whereas the flow F3, falling down between the diffuser 23 and the second cylindrical element 21, is conveyed over the central area. Therefore, the whole must surface 8 in the container 2 is substantially and evenly involved by the must downfall 8A from the tank 3.

This operation causes the must 8A falling down from the tank 3 to wet the must 8 and sink into it, mixing evenly together to prevent possible formation of bacterial colonies.

The system 1 is connected electrically, hydraulically and pneumatically through commonly known procedures not represented, to a programmable and/or presettable control system or electronic timer.

Operation of the system 1 according to the present invention is as follows.

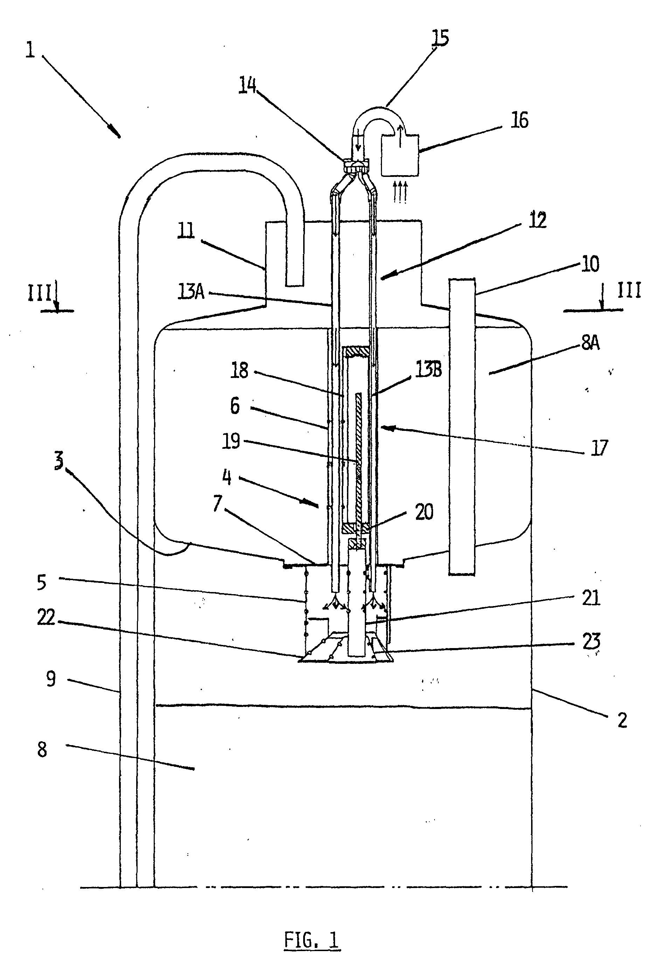

To this purpose, it is assumed to have the system 1 with the tank 3 filled with the must 8A and the valve 4 with the drain duct 5 in its closed condition, as illustrated in Fig. 1.

With the system I in the above condition, the turbine 16 is activated to introduce pressurized air in the container 2 through the tubular elements 13A, 13B and 13C, so that the carbon dioxide in the container 2 is expelled through the vent duct 10 and the environment will remain saturated with air.

After a preset time, e.g. 5 minutes with the turbine 16 activated to let pressurized air flow into the container 2, the subsequent operation will start, i.e. causing the must 8A to fall down from the tank 3 on the must 8 in the container 2 and its oxygenation; this is obtained opening the valve 4 by means of the pneumatic actuator 17 connected to the cylindrical element 6.

During the downfall time, i.e. indicatively about 20 seconds, the must 8A is oxygenated by the pressurized air outflow from the tubular elements 13A, 13B and 13C of the oxygenation device 12, since their lower end is practically submerged by the flow F of the must 8A flowing out of the tank 3.

According to the above description, oxygenation of the must 8A from the tank 3 through the pressurized air flowing out of the tubular elements, is quite higher than the one to be obtained with a Venturi tube sucking the air while discharging the must 8 from the lower section of the container 2 into the upper tank.

Moreover, downfall of the must 8A occurs in an environment, wherein the carbon oxide produced from fermentation of the must 8 and dwelling in the container 2 has been previously removed through the vent duct 10, further enhancing must oxygenation. Moreover, also the air contained in the upper section of the container 2 is introduced in the must 8, drained inside the must 8 through the downfall of the must 8A from the upper tank 3.

Therefore, the mixing of the must 8A from the tank 3 and the must 8 in the container 2 may take place without the risk of mixing carbon dioxide to the must as well.

Following a preset time after closing the valve 4 by means of the pneumatic actuator 17, the tank 3 is filled through an hydraulic pump sucking the must 8 from the lower section of the container 2 and conveying it to the tank 3 through the duct 9.

Now, following the loading of the must 8A in the upper tank 3, the start condition illustrated in Fig. 1 is reached again; the cycle is repeated for a predefined number of times, performing the above operations sequence continuously.

The number of cycles, the amount of pressurized air introduced for oxygenation and the relevant actuation times are in relation to the type of must present in the container 2, its organoleptic features, fermentation status and final features to be obtained.

From the above description it is clear how the system according to the present invention ensures improvement of the production process, in particular enhancing product oxygenation.

Therefore, from the above description the features of the fermentation system for vegetable substances, in particular for pressed grapes or must fermentation, according to the aim of the present invention and also its advantages are clear.

In particular:
- the system comprises at least a device being apt to increase must oxygenation during the fermentation process;
- the system according to the invention comprises at least a device being apt to obtain must oxygenation during must downfall from the upper tank to the lower container;
- the system according to the invention comprises at least a device being apt to obtain must oxygenation during the fermentation process;
- the system according to the invention comprises at least a device being apt to remove the carbon dioxide contents from the upper section of the container 2 before must downfall from the upper tank.

From the above it is clear how the system according to the invention is simple to manufacture, has a high functionality and reliability in all employment conditions and a limited industrial cost.

It is obvious that many changes are possible to the fermentation system for vegetable substances, in particular for grapes, according to the present invention, without departing from the novelty spirit of the innovative idea.

For instance, the forced oxygenation of the vegetable substances may be obtained while conveying the must from the container 2 to the tank 3 introducing forced air inside the connection tube 9 of the container 2 to the tank 3, by means of a compressed air source, such as a turbine 16.

It is obvious that many other changes are possible to the fermentation system for vegetable substances, in particular for grapes, according to the present invention, without departing from the novelty spirit of the innovative idea, and it is also clear that in practical actuation of the invention the various elements described above may be replaced by technical equivalent elements.

## Claims

1. A fermentation system (1) for vegetable substances (8,8A), in particular for grapes, comprising at least
- a container (2), containing a portion of said vegetable substances (8,8A),
- a tank (3), containing a second portion of said vegetable substances (8,8A), placed in the upper section of said container (2),
- a valve (4), being apt to put said tank (3) in communication with said container (2),
- a drain duct (5) to let said vegetable substances (8,8A) flow down from said tank (3) to said container (2),
- first means (17) for activating said valve (4),
- second means (12) for oxygenating said vegetable substances (8,8A).
**characterized in that**
said second oxygenation means (12) are apt to perform a forced oxygenation of said vegetable substances (8,8A).

2. A system, according to claim 1, **characterized in that** said forced oxygenation is obtained during downfall of said vegetable substance (8,8A) from said tank (3) to said container (2).

3. A system, according to claim 1, **characterized in that** said second means (12) are apt to perform pre-oxygenation of the atmosphere of said container (2) before downfall of said vegetable substances (8,8A) from said tank (3) to said container (2).

4. A system, according to claim 1, **characterized in that** said second means (12) comprise an oxygenation device (12).

5. A system, according to claim 4, **characterized in that** said oxygenation device (12) has a plurality of tubular elements (13A, 13B, 13C).

6. A system, according to claim 4, **characterized in that** said oxygenation device (12) has at least a compressed air source (16).

7. A system, according to claim 4, **characterized in that** said oxygenation device (12) has at least a manifold (14).

8. A system according at least to one of the previous claims, **characterized in that** said plurality of said tubular elements (13A,13B,13C) is associated to said compressed air source, in particular through said manifold (14).

9. A system, according to claim 5, **characterized in that** said plurality of tubular elements (13A,13B,13C) are located vertically in parallel and spaced from each other.

10. A system, according to claim 5, **characterized in that** said plurality of tubular elements (13A,13B,13C) are located in said drain duct (5).

11. A system according at least to one of the previous claims, **characterized in that** one end of said plurality of tubular elements (13A,13B,13C) is located in said manifold (14).

12. A system, according to claim 6, **characterized in that** said compressed air source (16) is a turbine (16).

13. A system, according to claim 1, **characterized in that** said valve (4) comprises a first cylindrical element (6), in particular said first cylindrical element (6) having a flange (7) apt for closing said drain duct (5).

14. A system, according to claim 1, **characterized in that** said first means (17) for activating said valve (4) comprise a pneumatic actuator (17).

15. A system, according to claim 14, **characterized in that** said pneumatic actuator (17) has a body (18) associated to said first cylindrical element (6) of said valve (4).

16. A system, according to claim 14, **characterized in that** said pneumatic actuator (17) has a shank (19) associated to a second cylindrical element (21) present in said drain duct (5).

17. A system, according to claim 1, **characterized in that** said drain duct (5) has at least a diffuser (22,23) apt to distribute substantially evenly a portion of the flow (F) of said vegetable substances (8,8A) from said tank (3) over a peripheral area and/or an intermediate area and/or a central area of the surface of said vegetable substance (8,8A) contained in said container (2).

18. A system, according to claim 13, **characterized in that** said first cylindrical element (6) is apt to obtain the filling limit of said tank (3).

19. A system according to one or more of the previous claims, **characterized in that** said pre-oxygenation of said container (2) is apt to remove from said container (2) the gases previously produced due to fermentation.

20. A system according to the previous claim, **characterized in that** said gases are removed through a vent duct (10), which puts the inside of said container (2) in communication with the environment outside.

21. A system according at least to one of the previous claims, **characterized in that** said turbine (16) is associated to an intake tube (9) for said tank (3).

22. A fermentation method for vegetable substances (8,8A), in particular for grapes, according to one or more of the previous claims.

23. A method according to the previous claim, **characterized in that** if comprises the following steps:
- closing the valve (4) providing communication of the tank (3) with the container (2),
- tank filling (3),
- turbine activation (16),
- pre-oxygenation of the container (2),
- opening of the valve (4) for downfall of the vegetable substances (8,8A) contained in the tank (3) from the tank (3) to the container (2),
- oxygenation of the vegetable substances (8,8A) flowing out of the tank (3) to the container (2).

24. A method according to the previous claim, **characterized in that** pre-oxygenation of said container (2) is apt to remove the gas contents caused by fermentation from the upper section of said container (2).

25. A method according to the previous claim, **characterized in that** opening of the valve (4) is activated after a preset pre-oxygenation time of the container (2).
